# FASCICULE DE BREVET EUROPEEN

(11) **EP 0 998 164 B1**
(45) Date de publication et mention de la délivrance du brevet: **28.12.2005**
(21) Numéro de dépôt: 99402420.6
(22) Date de dépôt: 04.10.1999
(51) Int. Cl.: H04Q 11/04

(54) **Procédé de surveillance de pertes de paquets dans un système de communication**
Verfahren zur Überwachung des Paketverlustes in einem Kommunikationssystem
Method for monitoring packet loss in a communication system

(30) Priorité: 29.10.1998 FR 9813569
(43) Date de publication de la demande: 03.05.2000
(73) Titulaire: ALCATEL, 75008 Paris (FR)
(72) Inventeur: Henrion, Michel, 1180 Bruxelles (BE)
(74) Mandataire: Sciaux, Edmond

(56) Documents cités:
- EP-A- 0 836 347
- WO-A-97/19535
- US-A- 5 740 173
- CHOI Y -H ET AL: "HIERARCHICAL PERFORMANCE MANAGEMENT USING OAM MIB IN ATM NETWORKS" IEEE GLOBAL TELECOMMUNICATIONS CONFERENCE, PHOENIX, ARIZONA, NOV. 3 - 8, 1997, vol. 1, 3 novembre 1997 (1997-11-03), pages 175-179, XP000737530 INSTITUTE OF ELECTRICAL AND ELECTRONICS ENGINEERS ISBN: 0-7803-4199-6
- MATSUNAGA H ET AL: "VIRTUAL PATH TEST FUNCTION AND ITS MECHANISM FOR ATM TRANSPORT NETWORKS" ELECTRONICS & COMMUNICATIONS IN JAPAN, PART I - COMMUNICATIONS, vol. 77, no. 9, 1 septembre 1994 (1994-09-01), pages 15-29, XP000485730 ISSN: 8756-6621

## Description

La présente invention est relative à un procédé pour surveiller les pertes de paquet dans un système de communication de type asynchrone.

Dans les réseaux de communication transportant de grandes quantités d'informations, on prévoit habituellement des systèmes de surveillance des pertes d'informations.

Dans de tels réseaux, les informations se présentent sous la forme de blocs de données, soit de longueur fixe, tels que des cellules ATM, soit de longueur variable, tels que des paquets. Dans ce qui suit, le terme "paquet" sera utilisé pour désigner n'importe quel type de bloc de données. Chaque bloc de données comprend, d'une part, l'information proprement dite et, d'autre part, une information d'acheminement attachée, dite en-tête, permettant de transférer les informations vers leur destination finale.

La surveillance et la localisation de défauts importants ne posent, en général, pas de problème difficile à résoudre, notamment parce que de tels défauts interviennent sur des quantités d'informations suffisamment importantes pour pouvoir être analysées par des moyens ou programmes sans grande sophistication. En effet, les défauts importants ou répétitifs sont détectables par des méthodes de tests classiques permettant de détecter et de localiser les défauts.

Par contre, quand les pertes d'informations sont faibles, celles-ci sont plus difficiles à surveiller.

De telles pertes d'informations rares, ou à faible probabilité, peuvent être de deux types différents. Le premier type de pertes se produit en fonctionnement normal. En effet, un réseau présente un taux admissible de pertes d'informations, qui est typiquement au plus de l'ordre de 10⁻¹⁰. De telles pertes en fonctionnement normal ont pour origine, par exemple, une congestion ou saturation momentanée d'une mémoire tampon par laquelle transitent les paquets.

Le second type de perte rare, ou de faible probabilité, correspond à certains types de défaillance de fonctionnement d'un dispositif particulier du réseau produisant des défauts transitoires qui sont difficiles à détecter. De tels défauts transitoires sont provoqués, par exemple, par un fonctionnement marginal dû à un mauvais contact ou à une tension instable ; ils peuvent aussi apparaître pour certains codes de données ou d'adresse particuliers, ou encore pour certains bits ou lignes de mémoire. De tels défauts transitoires peuvent provoquer des taux de pertes relativement faibles, tels que 10⁻⁸. Bien qu'intrinsèquement faible, un tel taux de pertes n'est pas admissible car il dépasse d'un facteur 100 le taux maximal admissible.

Pour la surveillance de telles pertes rares, les méthodes classiques sont basées, par exemple, sur un comptage des paquets entrants que l'on compare au comptage des paquets sortants, ou bien sur une détection des pertes de paquet dans chaque module.

Habituellement, dans les réseaux de commutation asynchrones comportant une multiplicité de modules terminaux d'entrée et de sortie et une multiplicité d'éléments de commutation, on fait appel aux deux techniques de surveillance. La première technique est appelée "surveillance de bout en bout" entre un module terminal d'entrée et un module terminal de sortie. La seconde technique est une surveillance au sein de chaque module, c'est-à-dire dans chaque module d'entrée, dans chaque module de sortie et dans chaque élément de commutation.

Selon la première technique (surveillance de bout en bout), un protocole de surveillance entre modules permet de comparer le nombre de paquets reçus au port de sortie au nombre de paquets transmis au port d'entrée. Par exemple, on affecte un marquage à chaque Nième paquet transmis au port d'entrée et, au port de sortie, on vérifie que N paquets sont bien reçus entre deux marquages consécutifs. Une autre méthode de surveillance du même type consiste à affecter un numéro d'ordre séquentiel aux paquets et à vérifier que l'ordre des paquets reçus correspond à l'ordre des paquets transmis. Outre la détection de perte de paquet, on peut aussi utiliser un code CRC (code de redondance cyclique) ou un bit de parité pour vérifier l'intégrité des paquets transférés.

Ces premières méthodes sont surtout utilisées pour mesurer le taux de pertes de paquet ; elles sont utilisées moins fréquemment pour la localisation des défauts affectant les paquets. Outre le traitement requis dans chaque port d'entrée et dans chaque port de sortie, elles présentent l'inconvénient de nécessiter des données additionnelles affectées à chaque paquet.

Par ailleurs, ces premières méthodes de surveillance de bout en bout ne permettent pas de distinguer entre un défaut transitoire et une élimination d'informations due à une congestion. En outre, elles ne donnent pas d'indication sur le module à l'origine du défaut affectant les paquets lors de leur transfert d'un module entrant vers un module sortant.

Selon la seconde technique (surveillance par module), les observations sont effectuées dans chacun des modules d'un noeud où des paquets peuvent être perdus. On peut ainsi localiser les modules à l'origine des défauts. Toutefois les défauts n'étant observés que localement, on ne peut pas déterminer si l'origine du défaut se trouve dans le module concerné ou bien si le paquet était déjà défectueux à son entrée dans ce module. La détermination du taux de pertes de paquet nécessite alors des mesures additionnelles par connexion dans tous les modules. Cette technique n'est d'ailleurs, en général, pas utilisée pour mesurer les taux de pertes de paquet de "bout en bout" en raison des difficultés de synchronisation entre modules.

L'article de HOI-Y ET AL: « HIERARCHICAL PERFORMANCE MANAGEMENT USING OAM MIB IN ATM NETWORKS » IEEE3 GLOBAL TELECOMMUNICATIONS CONFERENCE, PHOENIX, ARIZONA, NOV 3-8. 1997. vol 1, 3 Novembre 1997 (1997-1 1-03), décrit un procédé permettant de localiser un élément de commutation défectueux, et de transmettre des informations concernant cet élément. Il consiste à détecter les éléments de commutation défectueux en construisant des tables d'information appelées base d'informations de management, en utilisant des flux de cellules ATM spécialisées pour le transport d'informations d'administration et d'organisation. Ce procédé conduit donc à créer des flux de cellules supplémentaires qui consomment une partie de la bande passante.

L'invention remédie aux inconvénients des techniques connues. Elle permet de limiter ou de supprimer les données additionnelles à transmettre pour mesurer le taux de pertes de paquet et/ou pour localiser les défauts transitoires. Elle permet aussi d'améliorer la localisation de tels défauts transitoires ou de limiter le contexte additionnel requis en mémoire, pour le traitement dans les modules et les éléments de commutation.

A cet effet, le procédé selon l'invention est caractérisé en ce que, pour surveiller les pertes de paquet dans un réseau de transport de paquets en mode de transfert asynchrone, lorsqu'on détecte une perte de paquet dans au moins un module ou élément de commutation d'un noeud du réseau, on engendre, pour chaque paquet perdu, un paquet de signalisation dit de perte de paquet, et on achemine ce paquet de signalisation en utilisant les mêmes données d'acheminement que celles du paquet perdu.

Bien que la génération d'un tel paquet de signalisation de perte de paquet ne soit pas possible dans le cas particulier où les données d'acheminement du paquet perdu seraient elles-mêmes corrompues, le procédé selon l'invention est utilisable dans la majorité des situations de pertes de paquet. En effet, dans la majorité des cas (notamment les congestions de données), les données d'acheminement restent intactes.

Il est ainsi possible, en un ou plusieurs noeuds sélectionnés du réseau, de surveiller les pertes de paquet pour chaque connexion individuelle sans qu'il soit nécessaire que chaque paquet comporte des données additionnelles. En outre, les moyens à mettre en place pour la surveillance sont minimisés car il suffit, dans une réalisation préférée, d'effectuer cette surveillance dans les modules terminaux de sortie du noeud.

Dans un mode de réalisation, pour permettre la localisation des modules à l'origine des défauts affectant des paquets, le paquet de signalisation de perte de paquet comporte une information représentant l'identité du module ou de l'élément de commutation où il a été créé.

Pour une surveillance efficace, qui s'applique tant à la mesure du taux de pertes de paquet qu'à la localisation du module ou de l'élément de commutation à l'origine de la perte, il est utile que le paquet de signalisation de perte de paquet comprenne aussi une information représentant la cause du défaut, en particulier pour distinguer entre une perte due à une congestion de trafic, et une perte due à un défaut.

Les techniques de détection proprement dite des pertes de paquet étant connues, il n'est pas utile de les décrire ici.

Le procédé selon l'invention s'applique tant aux noeuds de commutation mono-trajet qu'aux noeuds de commutation multi-trajets. Par commutation "mono-trajet", on entend que l'acheminement des paquets d'une connexion donnée ne peut s'effectuer que selon un seul chemin prédéterminé à travers un noeud de commutation. Par commutation "multi-trajets", on entend que l'acheminement de chacun des paquets d'une connexion donnée peut s'effectuer dynamiquement selon une multiplicité de chemins possibles à travers un noeud de commutation.

Dans le cas d'une commutation mono-trajet, les données d'acheminement du paquet de signalisation de perte de paquet comportent l'identité de la connexion individuelle sur le chemin prédéterminé.

Dans le cas d'une commutation multi-trajets, les données d'acheminement du paquet de signalisation de perte de paquet ne comprennent qu'une adresse explicite ou implicite (par exemple l'identité d'un arbre de diffusion) du (ou des) port(s) de sortie destinataire(s) ; dans ce cas, l'identité de la connexion individuelle est incorporée dans la partie de données du paquet de signalisation.

Le paquet de signalisation de perte de paquet a, de préférence, une longueur plus petite que celle du paquet perdu de façon à limiter la quantité des données transmises pour ce type de signalisation. Toutefois, dans les réseaux où les paquets de données transportés ont une longueur fixe (par exemple les réseaux de cellules ATM), on est contraint de respecter cette même longueur fixe pour les paquets de signalisation ; cependant, étant donné que cette contrainte ne concerne que les liens externes entre noeuds, on pourra avantageusement utiliser des paquets de signalisation de longueur plus petite à l'intérieur d'un noeud de commutation.

Le paquet de signalisation comprend, tout d'abord, un en-tête comportant, d'une part, un indicateur représentant son identité de paquet de signalisation de perte de paquet, et, d'autre part, des données d'acheminement qui, comme indiqué ci-dessus, sont les mêmes que celles du paquet perdu.

Le paquet de signalisation de perte de paquet comprend, ensuite, des données proprement dites qui comportent l'identificateur de la connexion individuelle, dans le cas d'une commutation multi-trajets. Ces données peuvent aussi comporter une donnée représentant le type de perte et/ou les identités du module et du noeud où le paquet a été perdu.

Par ailleurs, on peut aussi prévoir un indicateur dit d'origine de perte de paquet, qui est initialisé à une première valeur, dite origine locale, lorsque le paquet de signalisation est généré dans un module ou un élément de commutation où se produit la perte de paquet, et modifié à une seconde valeur, dite origine externe, dès qu'un paquet de signalisation est transmis par un module de sortie en aval vers un autre noeud du réseau. Cet indicateur permet de distinguer entre les pertes de paquet locales dans le noeud et les pertes provenant d'un ou plusieurs autres noeuds du réseau en amont. On peut ainsi mesurer simultanément dans un noeud, pour chaque connexion individuelle, le taux de perte de paquet local (dans ce noeud) et le taux de perte de paquet sur un ensemble de N noeuds du réseau (N-1 noeuds en amont en plus de ce noeud).

L'invention ne se limite pas à un procédé de surveillance dans un réseau de transport de paquets. Elle concerne aussi le traitement de chaque paquet de signalisation de perte de paquet dans les modules ou éléments de commutation dans chaque noeud de ce réseau pour permettre la mise en oeuvre de cette surveillance des pertes de paquets.

L'invention concerne aussi le paquet de signalisation en tant que tel.

Dans chaque noeud de commutation, le module terminal de sortie est agencé soit pour transmettre à l'extérieur de ce noeud, par exemple sur la connexion vers le noeud suivant, les paquets de signalisation de pertes de paquet qu'il a reçus ainsi que ceux qu'il a éventuellement engendrés lui-même, soit pour éliminer les paquets de signalisation de perte de paquet reçus, la surveillance cumulée ne s'effectuant alors pas en aval au-delà de ce module terminal de sortie.

Ainsi, l'observation ou la surveillance du taux de pertes de paquet peut s'effectuer soit à travers un seul noeud, soit de façon cumulée sur une section de connexion comportant plusieurs noeuds de commutation. Il est également possible d'effectuer simultanément l'observation locale dans chaque noeud et l'observation cumulée sur plusieurs noeuds.

Par contre, la localisation, c'est-à-dire l'identification d'un module ou élément de commutation provoquant un nombre excessif de pertes, ne s'effectue en pratique qu'à l'intérieur de chaque noeud de commutation, chaque noeud assurant ses propres fonctions locales de maintenance.

Il est aussi possible de combiner la localisation des pertes de paquet dans chaque noeud avec la surveillance du taux de pertes cumulées sur plusieurs noeuds et/ou locale dans chaque noeud.

La présente invention prévoit un procédé pour surveiller les pertes de paquet dans un réseau de transport d'informations numériques transmises en mode de transfert asynchrone qui est tel que, lorsque l'on détecte une perte de paquet dans au moins un noeud du réseau :
on engendre, pour chaque paquet perdu, un paquet de signalisation de perte de paquet, et
on achemine ce paquet de signalisation en utilisant les mêmes données d'acheminement que celles du paquet perdu.

Selon un mode de réalisation, le paquet de signalisation comporte dans son en-tête, un indicateur signalant sa nature de paquet de signalisation de perte de paquet.

Selon un mode de réalisation, le paquet de signalisation comporte une information représentant l'identité du module ou élément de commutation du noeud où le paquet de signalisation a été engendré.

Selon un mode de réalisation, le paquet de signalisation comporte une information représentant la cause de la perte.

Selon un mode de réalisation, l'information représentant la cause de la perte de paquet permet de distinguer entre une perte par congestion, c'est-à-dire saturation d'une mémoire tampon, et un autre type de perte.

Selon un mode de réalisation, la surveillance étant effectuée dans un réseau de commutation mono-trajet, les données d'acheminement du paquet de signalisation comportent l'identité de la connexion.

Selon un mode de réalisation, la surveillance étant effectuée dans un réseau de commutation multi-trajets, les données d'acheminement du paquet de signalisation comportent une adresse de port de sortie destinataire explicite ou implicite, l'identité de la connexion étant incluse dans le paquet de signalisation, notamment dans sa partie de données.

Selon un mode de réalisation, le paquet de signalisation a une longueur égale à celle du paquet perdu.

Selon un mode de réalisation, le paquet de signalisation a une longueur plus petite que celle du paquet perdu.

Selon un mode de réalisation, le réseau étant du type à paquets ou cellules de longueur fixe, par exemple un réseau ATM, à l'intérieur d'un noeud de commutation, la longueur du paquet de signalisation est plus petite que la longueur fixe des paquets ou cellules transportés sur les liens externes dans le réseau.

Selon un mode de réalisation, la surveillance consiste à effectuer au moins l'une des opérations suivantes : surveiller le taux de pertes de paquet, détecter le (ou les) module(s) ou élément(s) à l'origine d'un excès de pertes, et détecter la cause de l'excès de pertes.

Selon un mode de réalisation, le réseau de transport de paquets comprend des noeuds de commutation asynchrones de paquets interconnectés par des liens externes transportant des paquets en multiplexage asynchrone, chaque noeud de commutation comportant des modules d'entrée et des modules de sortie interconnectés par au moins un élément de commutation, chaque module d'entrée ou de sortie, et chaque élément de commutation étant susceptible de perdre des paquets, les paquets de signalisation pouvant être engendrés dans un module d'entrée, un module de sortie, et dans un élément de commutation, et les paquets de signalisation engendrés dans un module d'entrée ou un élément de commutation sont acheminés vers les modules de sortie, ces derniers effectuant la surveillance et/ou transmettant les paquets de signalisation en aval, vers d'autres noeuds.

Selon un mode de réalisation, la surveillance étant effectuée dans un module de sortie d'un noeud, les paquets de signalisation sont éliminés dans un tel module de sortie.

Selon un mode de réalisation, pour surveiller les pertes de paquets cumulées sur N noeuds consécutifs, les N-1 premiers noeuds assurent la transmission des paquets de signalisation en aval vers le noeud suivant, et le dernier noeud assure la surveillance, les pertes surveillées dans ce dernier noeud comprenant, d'une part, les pertes détectées en amont du module de sortie du dernier noeud et indiquées dans les paquets de signalisation reçus, et, d'autre part, les pertes détectées localement dans ce module de sortie.

Selon un mode de réalisation, le paquet de signalisation comporte un indicateur dit d'origine de perte de paquet, qui est initialisé à une première valeur, dite origine locale, lorsque le paquet de signalisation est engendré dans un module ou un élément de commutation où se produit la perte de paquet, et modifié à une deuxième valeur, dite origine externe, dès qu'un paquet de signalisation est transmis par un module de sortie en aval vers un autre noeud du réseau.

Selon un mode de réalisation, l'indicateur d'origine de perte de paquet dans chaque paquet de signalisation est utilisé pour effectuer, d'une part, la surveillance du taux de pertes de paquet global sur plusieurs noeuds consécutifs, et, d'autre part, la surveillance sélective du taux de pertes de paquet local dans chaque noeud de cette suite de noeuds.

Selon un mode de réalisation, les paquets de signalisation engendrés dans des modules terminaux ou dans des éléments de commutation sont stockés dans une mémoire tampon spécifique pour mémoriser les paquets de signalisation, et ces paquets de signalisation provenant de la mémoire tampon spécifique sont multiplexés avec les paquets normaux transmis.

Selon un mode de réalisation, les paquets de signalisation engendrés dans des modules terminaux ou dans des éléments de commutation sont stockés dans la mémoire tampon de ce module ou élément de commutation en même temps que les paquets de données.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'un réseau de communication utilisant le procédé selon l'invention,
la figure 2 est un schéma d'un noeud de commutation faisant partie du réseau de la figure 1,
la figure 3 est un schéma d'un module terminal d'entrée, conforme à l'invention, du noeud de commutation de la figure 2,
la figure 4 est un schéma d'un élément de commutation, conforme à l'invention, du noeud de commutation de la figure 2,
la figure 5 est un schéma d'un module terminal de sortie conforme à l'invention, et
la figure 6 est un schéma analogue à celui de la figure 5, mais pour une variante.

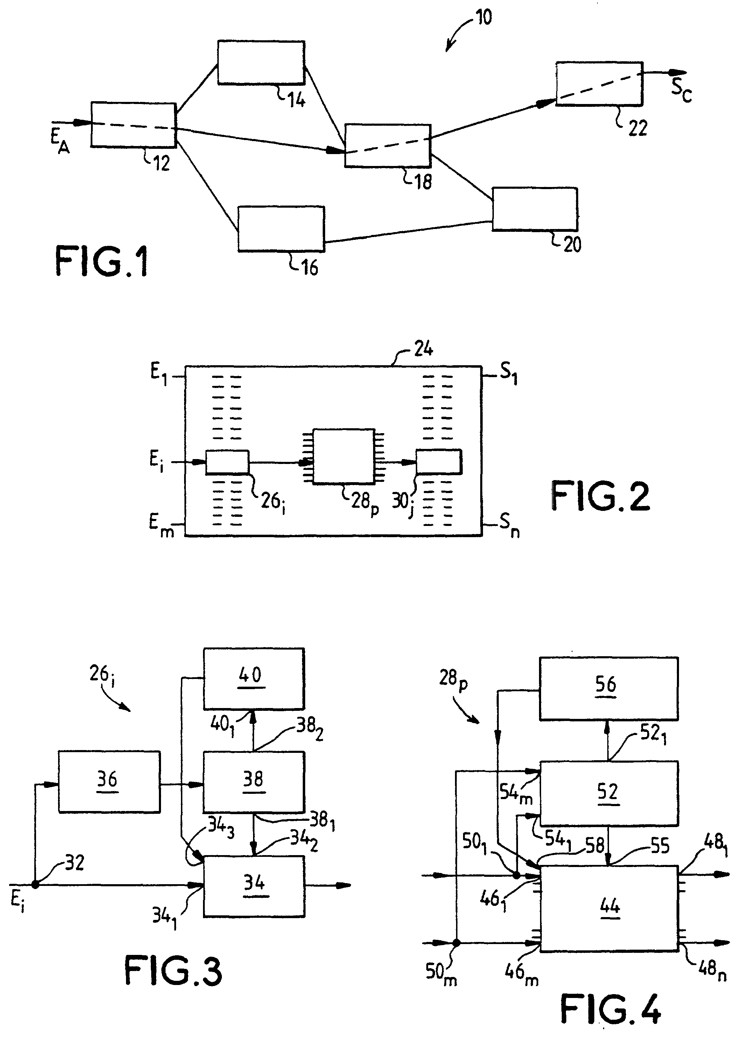

La figure 1 est une représentation schématique d'un réseau 10 de transport asynchrone de paquets (ou de cellules). Un tel réseau comporte plusieurs noeuds de commutation 12, 14, 16, 18, 20 et 22. Chaque noeud de commutation comprend m entrées et n sorties ; comme on le verra plus loin, on se réfère à une connexion à travers un noeud telle qu'elle transfère les paquets reçus sur un port d'entrée de rang i vers un port de sortie de rang j.

Dans le réseau de la figure 1, chaque paquet de la connexion considérée est appliqué en E_{A} sur une entrée du noeud 12 et est transmis vers une sortie S_{C} du noeud 22 par l'intermédiaire du noeud 18.

La connexion considérée entre l'entrée du noeud 12 et la sortie du noeud 22 constitue une section de connexion et, dans l'exemple, on détecte le taux de pertes de paquet entre le point d'entrée E_{A} et le point de sortie S_{C}. En d'autres termes, on mesure dans le noeud 22 un taux de pertes de paquet qui est cumulé sur les noeuds 12, 18 et 22.

Sur la figure 2, on a représenté de façon schématique un noeud 24 à m ports d'entréss E₁... Eₘ et n ports de sorties S₁ ... Sₙ.

Pour simplifier la description, on supposera que les modules terminaux dans un tel noeud comportent chacun un seul port d'entrée et un seul port de sortie constituant l'interface, avec un seul lien externe de transmission entre noeuds.

Sur la figure 2, le noeud est illustré selon une représentation dépliée, c'est-à-dire en séparant fonctionnellement chaque module terminal en deux parties : d'un côté un "module terminal d'entrée" (ou module "entrant") 26ᵢ (avec un seul "port d'entrée"), et de l'autre côté un "module terminal de sortie" (ou module "sortant") 30ⱼ (avec un seul "port de sortie").

Toutefois, chaque port d'entrée ou de sortie physique peut supporter plusieurs canaux virtuels multiplexés sur ce port qui sont utilisables pour des connexions individuelles distinctes.

Le noeud 24 comporte ensuite au moins un élément de commutation 28ₚ. Si on prévoit plusieurs éléments de commutation, ceux-ci sont disposés en un ou plusieurs étages.

On rappelle ici que, de façon générale, un module terminal peut comporter, selon l'architecture de réseau de commutation considérée, un ou plusieurs liens internes. Dans ce dernier cas, si le noeud comprend un seul élément de commutation, les liens internes sont tous raccordés à cet élément. Quand on prévoit plusieurs éléments de commutation (arrangés en un ou plusieurs étages), les liens de chaque module terminal peuvent être raccordés soit à un seul des éléments, soit distribués sur plusieurs éléments de commutation. L'invention englobe toutes ces possibilités et, de façon générale, est indépendante de la configuration du réseau de commutation.

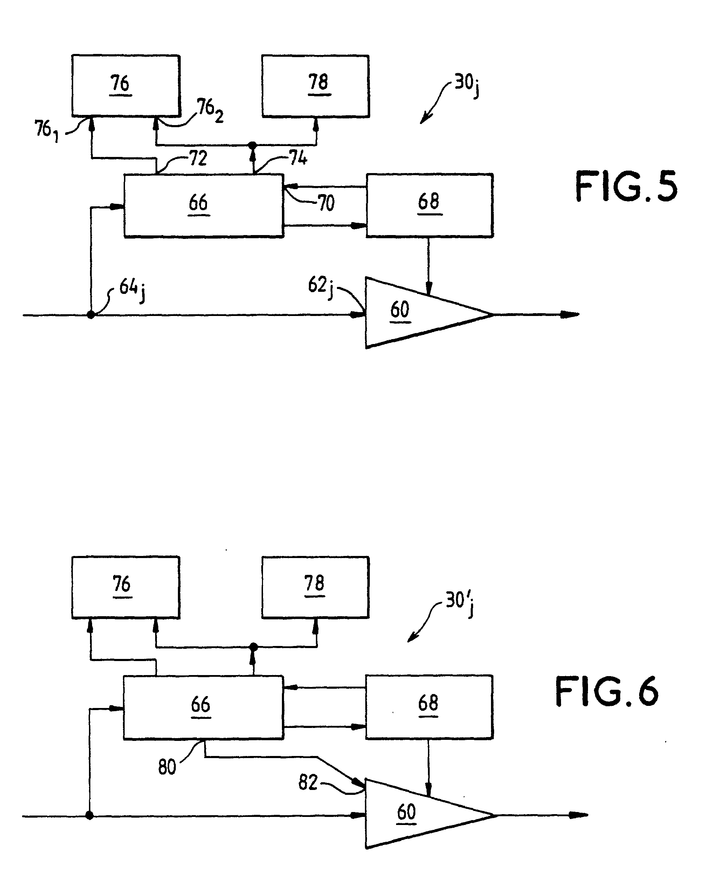

Dans ce qui suit, également pour simplifier la description, on supposera, comme dans l'exemple représenté, que chaque module terminal (d'entrée et de sortie) comporte un seul lien interne avec le réseau et que le noeud comporte un seul élément de commutation. Dans ce cas, l'élément de commutation 28ₚ présente m entrées reliées aux sorties respectives des modules 26ᵢ et n sorties qui sont reliées à des entrées respectives de modules terminaux de sorties 30ⱼ. Un exemple d'élément de commutation sera décrit avec la figure 4 et deux modes de réalisation de modules 30ⱼ seront décrits en relation avec les figures 5 et 6.

On se réfère maintenant à la figure 3 qui représente un exemple de réalisation d'un module terminal d'entrée 26ᵢ.

Les paquets provenant du port d'entrée Eᵢ sont appliqués à l'entrée d'un dispositif 32 permettant de séparer les données proprement dites des informations de commande des paquets reçus. Ces informations de commande se trouvent dans l'en-tête des paquets.

Les données sont stockées temporairement dans une mémoire tampon 34, tandis que les informations de commande sont traitées par un bloc 36 permettant l'interprétation du protocole de transport sur le lien externe. Le bloc 36 est appelé "Terminaison entrante du protocole externe de transport de paquets".

La sortie du bloc 36 est reliée à l'entrée d'un bloc 38 appelé "Préparation de paquet interne" dont le rôle est, d'une part, de convertir le protocole de transport externe au noeud en un protocole de transport interne au noeud, et d'autre part, selon l'invention, de détecter les paquets perdus.

Les modifications apportées au paquet selon le protocole interne au noeud apparaissent sur une sortie 38₁ du bloc 38 et sont appliquées sur une entrée 34₂ du bloc 34 de stockage temporaire de paquets. Les données apparaissant sur la sortie 38₁ du bloc 38 comprennent, notamment, des données d'acheminement à l'intérieur du noeud vers le port de sortie destinataire.

L'information de paquet perdu apparaît sur une seconde sortie 38₂ du bloc 38 et est appliquée sur une entrée 40₁ d'un bloc 40 dont le rôle est d'engendrer un paquet de signalisation de perte de paquet qui est transmis sur une entrée 34₃ du bloc 34.

La détection de paquet perdu, qui est effectuée dans le bloc 30, peut être réalisée par divers moyens connus tels que l'utilisation d'un code CRC ou de parité se trouvant dans le paquet arrivant par le port d'entrée Eᵢ, ou bien lors de l'élimination d'un paquet en cas de congestion dans la mémoire tampon.

Le paquet de signalisation de perte de paquet engendré par le bloc 40 présente, dans une réalisation, un format analogue à celui d'un paquet habituel. Il comprend un en-tête avec un indicateur caractérisant son identité de paquet de signalisation de perte de paquet et des données d'acheminement qui sont les mêmes que celles du paquet perdu. Dans le cas d'une commutation multi-trajets, ce paquet comporte aussi un identificateur de connexion. Dans le cas d'une commutation mono-trajet, l'identificateur de connexion fait partie des données d'acheminement du paquet.

Ces données sont suffisantes pour une surveillance de taux de pertes de paquet. Par contre, pour la localisation de défauts, il faut, en outre, insérer dans l'en-tête une information identifiant le module terminal ou l'élément de commutation où le défaut a pris naissance (dans l'exemple, dans le module 26ᵢ).

Quelle que soit l'utilisation (surveillance du taux de perte de paquet et/ou localisation de défauts), il peut être utile, par ailleurs, d'insérer dans ce paquet de signalisation de perte de paquet une information caractérisant le type de perte, précisant par exemple si elle est due à une congestion de mémoire tampon ou bien à un autre défaut.

Dans un exemple de réalisation, les paquets de signalisation de perte de paquet sont mémorisés dans la même mémoire tampon du bloc 34 que celle prévue pour les paquets de données normaux.

Dans une variante, on prévoit une mémoire tampon additionnelle dédiée aux paquets de signalisation ainsi qu'un multiplexeur permettant de transmettre alternativement les paquets de données normaux et les paquets de signalisation de perte de paquet (qui, par la suite, seront appelés "paquets de signalisation").

De même pour les éléments de commutation et pour les modules terminaux de sortie, on peut soit prévoir une seule mémoire tampon soit prévoir, en plus de la mémoire tampon habituelle, une mémoire tampon dédiée aux paquets de signalisation.

On se réfère maintenant à la figure 4 qui représente un élément de commutation 28ₚ. Cet élément 28ₚ comprend m entrées et n sorties, chaque entrée étant reliée à une sortie d'un module terminal d'entrée et chaque sortie étant reliée à une entrée d'un module terminal de sortie (dans l'exemple, simplifié, d'un seul élément de commutation).

L'élément de commutation 28ₚ comporte ainsi une matrice 44 d'interconnexion à m entrées 46₁ ... 46ₘ et n sorties 48₁ ... 48ₙ. Chacune des entrées 46ᵢ est reliée à un dispositif 50ᵢ dont le rôle est analogue à celui du dispositif 32 de la figure 3, à savoir qu'il sépare les données proprement dites des informations de commande se trouvant dans l'en-tête de chaque paquet. Les données proprement dites sont transmises aux entrées correspondantes 46ᵢ de la matrice 44, tandis que les informations de commande, se trouvant dans l'en-tête, sont transmises vers un bloc 52 de commande d'acheminement de paquet. Ce bloc 52, qui comporte m entrées, 54₁ à 54ₘ, exploite les informations d'acheminement, contenues dans les en-têtes, de façon à commander la matrice d'interconnexion 44 afin que chaque paquet soit transmis vers la sortie appropriée du noeud 24. Pour cela, le signal de commande engendré par le bloc 52 est appliqué sur une entrée 55 de la matrice 44.

Par ailleurs, dans le bloc 52, on effectue, conformément à l'invention, une détection de paquet perdu. Cette détection de paquet perdu est réalisée comme décrit ci-dessus pour le bloc 38 de la figure 3. L'information de paquet perdu est transmise, par une sortie 52₁ du bloc 52 vers l'entrée d'un bloc 56 générateur de paquets de signalisation. Les paquets de signalisation apparaissent sur la sortie du bloc 56 et sont appliqués sur l'entrée 58 de la matrice 44. Le bloc 56 est analogue au bloc 40 du module terminal d'entrée décrit en relation avec la figure 3.

Le module terminal de sortie représenté sur la figure 5 est utilisé quand, dans le noeud considéré, on exploite localement les paquets de signalisation, sans les transmettre en aval vers un autre noeud du réseau. Le module terminal de sortie représenté sur la figure 6 est analogue à celui représenté sur la figure 5 ; mais il comporte un moyen additionnel pour transmettre les paquets de signalisation en aval vers le noeud suivant.

Le module 30ⱼ représenté sur la figure 5 comprend une mémoire tampon 60 comportant, dans l'exemple considéré, une entrée 62ⱼ reliée à la sortie 48ᵢ de l'élément de commutation 28ₚ (figure 4).

L'entrée 62ᵢ reçoit les données du paquet par l'intermédiaire d'un dispositif 64ⱼ analogue au dispositif 32 de la figure 3, c'est-à-dire séparant, pour chaque paquet, les données de l'en-tête. Les en-têtes sont eux transmis à un bloc 66 permettant, d'une part, de détecter les paquets de signalisation de perte de paquet et, d'autre part, de transmettre l'ensemble des en-têtes vers un bloc 68 de préparation de paquet externe dont le rôle est de reconvertir ces en-têtes en un format convenant pour le transport des paquets sur les liens externes dans le réseau, selon le protocole externe de transport utilisé vers le noeud suivant.

Par ailleurs, dans le bloc 68, on prévoit un moyen de détection de perte de paquet. Le bloc 68 engendre des paquets de signalisation qui sont transmis sur une entrée 70 du bloc 66 de détection de perte.

Le bloc 66 comporte deux sorties 72 et 74. La première sortie 72 délivre une information relative à un paquet perdu localement dans le module 30ⱼ et détecté par le bloc 68, et la seconde sortie 74 délivre une information relative à un paquet perdu en amont (c'est-à-dire en dehors du module terminal considéré) consécutive à la réception d'un paquet de signalisation.

En outre, comme on le verra plus loin, pour distinguer entre un paquet de signalisation émis dans le noeud considéré et un paquet de signalisation émis dans un autre noeud en amont du noeud où s'effectue l'observation, chacun de ces paquets de signalisation comporte également un indicateur binaire dit d'origine de perte de paquet. La première valeur, dite origine locale, est initialisée lorsque le paquet de signalisation est engendré dans un module, ou un élément de commutation, où se produit la perte de paquet (origine locale dans le noeud où se produit la perte de paquet). Cette première valeur est modifiée en une deuxième valeur, dite origine externe, dès qu'un paquet de signalisation est transmis par un module de sortie en aval vers un autre noeud du réseau (origine externe dans un noeud en amont du noeud considéré). Cet indicateur d'origine de perte de paquet ne change pas de valeur tant que le paquet de signalisation circule dans le noeud où il a été créé.

Les sorties 72 et 74 sont reliées à des entrées, respectivement 76₁ et 76₂ d'un bloc 76 d'observation de taux de pertes de paquet, tandis que la sortie 74 est reliée à l'entrée d'un bloc 78 d'identification de module causant un nombre excessif de pertes. On voit ainsi que le taux de pertes de paquet, observé sur une section de connexion en amont pouvant comporter un ou plusieurs noeuds, dépend, tant des pertes en amont que des pertes locales dans le module terminal de sortie. Pour l'identification des modules ou éléments d'un noeud causant un nombre excessif de pertes, on a besoin seulement d'identifier les pertes survenues dans les modules ou éléments en amont dans ce noeud, les pertes locales étant déjà identifiées dans le bloc 68. Toutefois, en variante, le module 68 peut également transmettre l'identification locale au bloc 78.

Le module terminal de sortie 30'ᵢ représenté sur la figure 6 se distingue de celui représenté sur la figure 5 seulement par le fait que le bloc 66 comporte une sortie 80 qui transmet les paquets de signalisation sur une entrée 82 de la mémoire tampon 60, ce module 30'ᵢ ayant pour but de permettre la transmission des paquets de signalisation sur la sortie correspondante du noeud vers le noeud suivant.

Les applications des dispositifs décrits en relation avec les figures 2 à 6 peuvent se classer en deux catégories. La première catégorie est la surveillance sur une connexion seulement à l'intérieur d'un seul noeud de commutation. La seconde catégorie (comme représenté sur la figure 1) est la surveillance sur une section de connexion à travers plusieurs noeuds de commutation consécutifs dans le réseau. Il est également possible de combiner ces deux catégories d'applications.

Pour la première catégorie d'application, on fera appel à un module terminal de sortie du type de celui représenté sur la figure 5 dans lequel les paquets de signalisation reçus sont éliminés localement.

La surveillance limitée à un seul noeud de commutation (première catégorie) peut présenter trois aspects :

Le premier aspect concerne la localisation du module ou élément provoquant un nombre excessif de pertes. Cette identification s'effectue localement dans le noeud.

Le deuxième aspect se rapporte à la détection du taux de pertes de paquet lors de leur transfert à travers le noeud.

Le troisième aspect est la combinaison des deux premiers à l'aide des mêmes paquets de signalisation, c'est-à-dire qu'il concerne, dans le noeud considéré, à la fois la localisation du module ou élément provoquant un excès de pertes et la détection du taux de pertes de paquet.

Le module 30ⱼ représenté sur la figure 5 correspond à ce troisième aspect. Dans le cas où l'on ne fait appel qu'à la localisation, on désactive le bloc 76 ; en variante on prévoit un module simplifié dépourvu d'un tel bloc 76.

Inversement, quand on veut effectuer seulement une observation ou détection de taux de pertes de paquet, on désactive le bloc 78 d'identification de module provoquant un excès de pertes, ou on utilise un module simplifié 30ⱼ ne comportant pas ce bloc 78.

Pour la seconde catégorie d'applications, c'est-à-dire la surveillance ou détection du taux de pertes de paquet cumulé sur une section de connexion à travers plusieurs noeuds consécutifs, comme les noeuds 12, 18 et 22 sur la figure 1, le dernier noeud 22 est du type correspondant à la première catégorie, c'est-à-dire qu'il comprend un module terminal de sortie du type représenté sur la figure 5 dans lequel les paquets de signalisation sont éliminés. Par contre, les autres noeuds, 12 et 18, comportent un module terminal de sortie du type de celui représenté sur la figure 6.

Il existe au moins sept possibilités de surveillance dans cette seconde catégorie :

La première possibilité consiste à détecter seulement le taux cumulé de pertes de paquet sur la section de connexion formée des noeuds 12, 18 et 22.

La deuxième possibilité concerne - en plus de la surveillance du taux de pertes de paquet sur la section 12, 18 et 22 - la localisation des modules ou éléments provoquant un excès de pertes dans au moins un noeud.

La troisième possibilité consiste à effectuer une détection locale (en plus de celle sur la section de connexion) de taux de pertes de paquet dans au moins un noeud, différent du dernier noeud 22.

La quatrième possibilité est une combinaison des troisième et deuxième possibilités.

La cinquième possibilité consiste à effectuer la localisation du module ou élément provoquant un excès de pertes dans le dernier noeud 22 (en plus de la 5 détection de taux de pertes de paquet sur la section).

La sixième possibilité consiste à effectuer une détection de taux de pertes de paquet à l'intérieur du dernier noeud (également en plus de la détection du taux de pertes de paquet sur la section).

La septième possibilité est une combinaison des cinquième et sixième possibilités.

Pour la surveillance sur une section de connexion, comprenant plusieurs noeuds, on fait appel, selon le type de transmission, soit à des paquets de longueur variable, soit à des paquets de longueur fixe.

Dans le premier cas (paquets de longueur variable), on pourra conférer au paquet de signalisation une longueur plus petite que celle du paquet perdu.

Dans le second cas (par exemple le mode de transmission ATM), les paquets ou cellules doivent être transmis entre noeuds suivant une longueur constante. Dans cette hypothèse, on peut conserver cette longueur constante à l'intérieur du noeud ; on peut aussi utiliser une longueur plus faible à l'intérieur du noeud et, dans le module terminal de sortie, convertir chaque cellule de façon qu'à l'extérieur du noeud elle présente la longueur constante requise.

Pour la localisation des modules ou éléments provoquant un excès de pertes, on est généralement intéressé seulement par la localisation des défauts ayant pris naissance dans le noeud concerné, alors que l'observation du taux de pertes de paquet peut devoir être effectuée sur l'ensemble des pertes de paquet survenues sur une section de connexion en amont, cette section comportant plusieurs noeuds.

Aussi, pour pouvoir effectuer simultanément ces deux types de surveillance sur la base d'ensembles de paquets de signalisation différents, comme expliqué plus haut, on affectera au paquet de signalisation un indicateur dit d'origine de perte de paquet, qui précise si le paquet a été perdu dans le noeud considéré (première valeur, dite origine locale) ou bien dans un autre noeud du réseau en amont du noeud considéré (deuxième valeur, dite origine externe).

De cette manière, pour effectuer, dans le bloc 78 du module terminal de sortie, la surveillance des modules présentant un taux excessif de pertes de paquet dans le noeud considéré, on pourra effectuer une sélection de manière à ne tenir compte que des paquets de signalisation reçus qui sont d'origine locale. Simultanément, l'observation, dans le module 76 du terminal de sortie, du taux de pertes de paquet sur une section de connexion pourra être effectuée en tenant compte de l'ensemble des paquets de signalisation reçus, qu'ils soient d'origine locale ou d'origine externe.

De même, cet indicateur d'origine (locale ou externe) du noeud où le paquet a été perdu est également utile pour effectuer l'observation simultanée et sélective du taux de pertes de paquet à l'intérieur d'un noeud, ainsi que du taux de pertes cumulé sur une section de connexion comprenant plusieurs noeuds.

Dans ce cas, dans le module terminal de sortie du dernier noeud, le bloc 76 (figure 5) utilise de façon sélective les informations reçues des sorties 72 et 74 du bloc 66. Pour déterminer le taux de pertes de paquet seulement à l'intérieur du noeud correspondant, le bloc 76 utilise les informations relatives au module défectueux qui apparaissent sur la sortie 72 du bloc 66, ainsi qu'une partie des informations qui apparaissent sur la sortie 74 du bloc 66, à savoir celles qui correspondent à des paquets de signalisation reçus avec un indicateur d'origine de perte de paquet ayant la valeur "origine locale". Par contre, ce dispositif 76 utilise toutes les informations apparaissant sur les sorties 72 et 74 du bloc 66 pour déterminer le taux cumulé de pertes sur la section de connexion.

## Revendications

1. Procédé pour surveiller les pertes de paquet dans un réseau (10) de transport d'informations numériques transmises en mode de transfert asynchrone, consistant à tester les paquets transportant la charge utile ;
**caractérisé en ce que**, lorsque l'on détecte une perte de paquet dans au moins un noeud (12, 14, 16, 18, 20, 22, 24) du réseau (10) :
- on engendre, pour chaque paquet perdu, un paquet de signalisation de perte de paquet destiné à transporter en aval du réseau des informations concernant cette perte de paquet, et
- on achemine ce paquet de signalisation en aval dans le réseau en utilisant les mêmes données d'acheminement que celles du paquet perdu.

2. Procédé selon la revendication 1, **caractérisé en ce que** le paquet de signalisation comporte dans son en-tête un indicateur signalant sa nature de paquet de signalisation de perte de paquet.

3. Procédé selon la revendication 1 ou 2, **caractérisé en ce que** le paquet de signalisation comporte une information représentant l'identité du module ou élément de commutation du noeud où le paquet de signalisation a été engendré.

4. Procédé selon l'une quelconque des revendications 1 à 3, **caractérisé en ce que** le paquet de signalisation comporte une information représentant la cause de la perte.

5. Procédé selon la revendication 4, **caractérisé en ce que** l'information représentant la cause de la perte de paquet permet de distinguer entre une perte par congestion, c'est-à-dire saturation d'une mémoire tampon, et un autre type de perte.

6. Procédé selon l'une quelconque des revendications précédentes, la surveillance étant effectuée dans un noeud de commutation dit mono-trajet, dans lequel l'acheminement des paquets d'une connexion donnée ne peut s'effectuer que selon un seul chemin prédéterminé à travers ce noeud ; **caractérisé en ce que** les données d'acheminement du paquet de signalisation comportent l'identité de cette connexion.

7. Procedé selon l'une quelconque des revendications 1 à 5, la surveillance étant effectuée dans un noeud de commutation dit multi-trajets, dans lequel l'acheminement de chacun des paquets d'une connexion donnée peut s'effectuer dynamiquement selon une multiplicité de chemins possibles à travers ce noeud ; **caractérisé en ce que** les données d'acheminement du paquet de signalisation comportent une adresse de port de sortie destinataire explicite ou implicite, l'identité de cette connexion étant incluse dans le paquet de signalisation, notamment dans sa partie de données.

8. Procédé selon l'une quelconque des revendications précédentes, **caractérisé en ce que** le paquet de signalisation a une longueur égale à celle du paquet perdu.

9. Procédé selon l'une quelconque des revendications 1 à 7, **caractérisé en ce que** le paquet de signalisation a une longueur plus petite que celle du paquet perdu.

10. Procédé selon la revendication 9, **caractérisé en ce que** le réseau étant du type à paquets ou cellules de longueur fixe, par exemple un réseau ATM, à l'intérieur d'un noeud de commutation, la longueur du paquet de signalisation est plus petite que la longueur fixe des paquets ou cellules transportés sur les liens externes dans le réseau.

11. Procédé selon l'une quelconque des revendications précédentes, **caractérisé en ce que** la surveillance consiste à effectuer au moins l'une des opérations suivantes : surveiller le taux de pertes de paquet, détecter le (ou les) module(s) ou élément(s) à l'origine d'un excès de pertes, et détecter la cause de l'excès de pertes.

12. Procédé selon l'une quelconque des revendications précédentes, **caractérisé en ce que** :
le réseau (10) de transport de paquets comprend des noeuds de commutation asynchrones de paquets interconnectés par des liens externes transportant des paquets en multiplexage asynchrone, chaque noeud de commutation comportant des modules d'entrée (26ᵢ) et des modules de sortie (30ⱼ) interconnectés par au moins un élément de commutation (28ₚ), chaque module d'entrée ou de sortie, et chaque élément de commutation étant susceptible de perdre des paquets,
les paquets de signalisation peuvent être engendrés dans un module d'entrée, un module de sortie, et dans un élément de commutation, et
les paquets de signalisation engendrés dans un module d'entrée ou un élément de commutation sont acheminés vers les modules de sortie, ces derniers effectuant la surveillance et/ou transmettant les paquets de signalisation en aval, vers d'autres noeuds

13. Procédé selon la revendication 12, **caractérisé en ce que** la surveillance étant effectuée dans un module de sortie d'un noeud, les paquets de signalisation sont éliminés dans un tel module de sortie.

14. Procédé selon la revendication 13, **caractérisé en ce que**, pour surveiller les pertes de paquets cumulées sur N noeuds consécutifs, les N-1 premiers noeuds assurent la transmission des paquets de signalisation en aval vers le noeud suivant, et le dernier noeud assure la surveillance, les pertes surveillées dans ce dernier noeud comprenant, d'une part, les pertes détectées en amont du module de sortie du dernier noeud et indiquées dans les paquets de signalisation reçus, et, d'autre part, les pertes détectées localement dans ce module de sortie.

15. Procédé selon l'une quelconque des revendications précédentes, **caractérisé en ce que** le paquet de signalisation comporte un indicateur dit d'origine de perte de paquet, qui est initialisé à une première valeur, dite origine locale, lorsque le paquet de signalisation est engendré dans un module ou un élément de commutation où se produit la perte de paquet, et modifié à une deuxième valeur, dite origine externe, dès qu'un paquet de signalisation est transmis par un module de sortie en aval vers un autre noeud du réseau.

16. Procédé selon la revendication 15, **caractérisé en ce que** l'indicateur d'origine de perte de paquet dans chaque paquet de signalisation est utilisé pour effectuer, d'une part, la surveillance du taux de pertes de paquet global sur plusieurs noeuds consécutifs, et, d'autre part, la surveillance sélective du taux de pertes de paquet local dans chaque noeud de cette suite de noeuds.

17. Procédé selon l'une quelconque des revendications précédentes, **caractérisé en ce que** les paquets de signalisation engendrés dans des modules terminaux ou dans des éléments de commutation sont stockés dans une mémoire tampon spécifique pour mémoriser les paquets de signalisation, et **en ce que** ces paquets de signalisation provenant de la mémoire tampon spécifique sont multiplexés avec les paquets normaux transmis.

18. Procédé selon l'une quelconque des revendications 1 à 16, **caractérisé en ce que** les paquets de signalisation engendrés dans des modules terminaux ou dans des éléments de commutation sont stockés dans la mémoire tampon de ce module ou élément de commutation en même temps que les paquets de données.

## Patentansprüche

1. Verfahren zum Überwachen der Paketverluste in einem Ubertragungsnetz (10) für im asynchronen Übertragungsmodus übertragene digitale Informationen, darin bestehend, dass die die Nutzlast transportierenden Pakete gestestet werden,
**dadurch gekennzeichnet, dass** dann, wenn ein Paketverlust in mindestens einem Knoten (12, 14, 16, 18, 20, 22, 24) des Netzes (10) erkannt wird:
- für jedes verlorene Paket ein Paketverlust-Signalisierungspaket erzeugt wird, welches dazu dient, Informationen über diesen Paketverlust in den dahinter liegenden Bereich des Netzes zu übertragen; und
- dieses Signalisierungspaket unter Verwendung derselben Leitwegdaten in den dahinter liegenden Bereich des Netzes geleitet wird wie denen des verlorenen Pakets.

2. Verfahren nach Anspruch 1, **dadurch gekennzeichnet, dass** das Signalisierungspaket in seinem Header einen Indikator umfasst, der die Art des Paketverlust-Signalisierungspakets angibt.

3. Verfahren nach Anspruch 1 oder 2, **dadurch gekennzeichnet, dass** das Signalisierungspaket eine Information umfasst, welche die Identität des Moduls oder des Koppelelements des Knotens angibt, in dem das Signalisierungspaket erzeugt wurde.

4. Verfahren nach einem beliebigen der Ansprüche 1 bis 3, **dadurch gekennzeichnet, dass** das Signalisierungspaket eine Information umfasst, welche die Ursache des Verlusts angibt.

5. Verfahren nach Anspruch 4, **dadurch gekennzeichnet, dass** die Information, welche die Ursache des Paketverlusts angibt, die Möglichkeit bietet, zwischen einem Verlust aufgrund von Überlastung, das heißt einer Sättigung eines Pufferspeichers, und einem anderen Verlusttyp zu unterscheiden.

6. Verfahren nach einem beliebigen der vorhergehenden Ansprüche, wobei die Überwachung in einem so genannten Einweg-Vermittlungsknoten erfolgt, in dem die Leitweglenkung der Pakete einer gegebenen Verbindung nur auf einem einzigen zuvor festgelegten Weg durch diesen Knoten erfolgen kann, **dadurch gekennzeichnet, dass** die Leitwegdaten des Signalisierungspakets die Identität dieser Verbindung umfassen.

7. Verfahren nach einem beliebigen der Ansprüche 1 bis 5, wobei die Überwachung in einem so genannten Mehrwege-Vermittlungsknoten erfolgt, in dem die Leitweglenkung jedes der Pakete einer gegebenen Verbindung dynamisch auf einer Vielzahl möglicher Wege durch einen Vermittlungsknoten erfolgen kann, **dadurch gekennzeichnet, dass** die Leitwegdaten des Signalisierungspakets eine explizite oder implizite Adresse des als Ziel dienenden Ausgangsanschlusses umfassen, wobei die Identität dieser Verbindung in dem Signalisierungspaket enthalten ist, insbesondere in seinem Datenteil.

8. Verfahren nach einem beliebigen der vorhergehenden Ansprüche, **dadurch gekennzeichnet, dass** das Signalisierungspaket eine Länge gleich derjenigen des verlorenen Pakets aufweist.

9. Verfahren nach einem beliebigen der Ansprüche 1 bis 7, **dadurch gekennzeichnet, dass** das Signalisierungspaket eine kleinere Länge als die des verlorenen Pakets aufweist.

10. Verfahren nach Anspruch 9, **dadurch gekennzeichnet, dass**, da das Netz dem Typ mit Paketen oder Zellen von fester Länge im Innern eines Vermittlungsknotens entspricht, zum Beispiel einem ATM-Netz, die Länge des Signalisierungspakets kleiner ist als die feste Länge der Pakete oder Zellen, die auf den externen Verbindungen im Netz transportiert werden.

11. Verfahren nach einem beliebigen der vorhergehenden Ansprüche, **dadurch gekennzeichnet, dass** die Überwachung darin besteht, mindestens einen der folgenden Schritte auszuführen: Überwachen der Paketverlustrate, Erkennen des Moduls (oder der Module) oder Elements (Elemente), von denen ein Übermaß an Verlusten ausgeht, und Erkennen der Ursache des Übermaßes an Verlusten.

12. Verfahren nach einem beliebigen der vorhergehenden Ansprüche, **dadurch gekennzeichnet, dass**:
das Paketübertragungsnetz (10) asynchrone Paketvermittlungsknoten umfasst, die untereinander durch externe Verbindungen verbunden sind, welche Pakete in einem asynchronen Multiplexverfahren übertragen, wobei jeder Vermittlungsknoten Eingangsmodule (26ᵢ) und Ausgangsmodule (30ⱼ) umfasst, die untereinander durch mindestens ein Koppelelement (28ₚ) verbunden sind,
wobei für jedes Eingangs- oder Ausgangsmodul und jedes Koppelelement die Möglichkeit besteht, dass es Pakete verliert,
wobei die Signalisierungspakete in einem Eingangsmodul, einem Ausgangsmodul und in einem Koppelelement erzeugt werden können; und
wobei die in einem Eingangsmodul oder in einem Koppelelement erzeugten Signalisierungspakete zu den Ausgangsmodulen geleitet werden, wobei letztere die Überwachung ausführen und/oder die Signalisierungspakete zu anderen dahinter liegenden Knoten weiter übertragen.

13. Verfahren nach Anspruch 12, **dadurch gekennzeichnet, dass**, da die Überwachung in einem Ausgangsmodul eines Knotens erfolgt, die Signalisierungspakete in einem solchen Ausgangsmodul eliminiert werden.

14. Verfahren nach Anspruch 13, **dadurch gekennzeichnet, dass** zur Überwachung der Gesamtpaketverluste über N aufeinander folgende Knoten die N-1 ersten Knoten die Übertragung der Signalisierungspakete zum dahinter liegenden folgenden Knoten übernehmen und der letzte Knoten die Überwachung übernimmt, wobei die überwachten Verluste in diesem letzten Knoten einerseits die vor dem Ausgangsmodul des letzten Knotens erkannten und in den empfangenen Signalisierungspaketen angegebenen Verluste umfassen und andererseits die lokal in diesem Ausgangsmodul erkannten Verluste.

15. Verfahren nach einem beliebigen der vorhergehenden Ansprüche, **dadurch gekennzeichnet, dass** das Signalisierungspaket einen so genannten Paketverlust-Ursprungsindikator umfasst, der mit einem ersten Wert, genannt lokaler Ursprung, initialisiert wird, wenn das Signalisierungspaket in einem Modul oder einem Koppelelement, in dem sich der Paketverlust ereignet, initialisiert wird, und der in einen zweiten Wert, genannt externer Ursprung, geändert wird, sobald ein Signalisierungspaket von einem dahinter liegenden Ausgangsmodul zu einem anderen Knoten des Netzes übertragen wird.

16. Verfahren nach Anspruch 15, **dadurch gekennzeichnet, dass** der Paketverlust-Ursprungsindikator in jedem Signalisierungspaket dafür verwendet wird, einerseits die Überwachung der gesamten Paketverlustrate über mehrere aufeinander folgende Knoten durchzuführen und andererseits die selektive Überwachung der lokalen Paketverlustrate in jedem einzelnen Knoten dieser Folge von Knoten.

17. Verfahren nach einem beliebigen der vorhergehenden Ansprüche, **dadurch gekennzeichnet, dass** die in Endmodulen oder in Koppelelementen erzeugten Signalisierungspakete in einem spezifischen Pufferspeicher für die Speicherung der Signalisierungspakete gespeichert werden und dadurch, dass diese aus dem spezifischen Pufferspeicher kommenden Signalisierungspakete mit den übertragenen normalen Paketen gemultiplext werden.

18. Verfahren nach einem beliebigen der vorhergehenden Ansprüche 1 bis 16, **dadurch gekennzeichnet, dass** die in Endmodulen oder in Koppelelementen erzeugten Signalisierungspakete im Pufferspeicher dieses Moduls oder Koppelelements zur selben Zeit wie die Datenpakete gespeichert werden.

## Claims

1. A method of monitoring packet losses in a network (10) for transporting digital data in asynchronous transfer mode, the method consisting in testing the packets transporting payload data and being
**characterized in that**, if packet loss is detected in one or more nodes (12, 14, 16, 18, 20, 22, 24) of the network (10):
- generating a packet loss signaling packet for each lost packet in order to transport data concerning said packet loss downstream in the network, and
- routing said signaling packet downstream in the network using the routing data of the lost packet.

2. A method according to claim 1, **characterized in that** the signaling packet includes in its header an indicator to the effect that it is a packet loss signaling packet.

3. A method according to claim 1 or claim 2, **characterized in that** the signaling packet includes data representing the identity of the switching element or module of the node in which the signaling packet was generated.

4. A method according to any one of claims 1 to 3, **characterized in that** the signaling packet includes data representing the cause of the packet loss.

5. A method according to claim 4, **characterized in that** the data representing the cause of the packet loss distinguishes between losses through congestion, i.e. saturation of a buffer, and other types of loss.

6. A method according to any one of the preceding claims when executed in a single-path switching node wherein the packets of a given connection can be routed only along a single predetermined path across the node, **characterized in that** the routing data of the signaling packet includes the identity of said connection.

7. A method according to any one of claims 1 to 5 when executed in a multipath switching node within which the routing of each of the packets of a given connection may be effected dynamically along a multiplicity of paths across the node, the method being **characterized in that** the routing data of the signaling packet includes an explicit or implicit destination output port address, with the signaling packet, and in particular its data portion, including the identity of said connection.

8. A method according to any one of the preceding claims, **characterized in that** the length of the signaling packet is equal to that of the lost packet.

9. A method according to any one of claims 1 to 7, **characterized in that** the length of the signaling packet is shorter than that of the lost packet.

10. A method according to claim 9, **characterized in that**, if the network is of the fixed length cell or packet type, for example if it is an ATM network, the length of the signaling packet within a switching node is shorter than the fixed length of packets or cells transported on external links in the network.

11. A method according to any one of the preceding claims, **characterized in that** it consists in performing at least one of the following operations: monitoring the packet loss rate; detecting one or more modules or elements as originating excessive losses; and detecting the cause of excessive losses.

12. A method according to any one of the preceding claims, **characterized in that**:
- the packet transport network (10) comprises asynchronous packet switching nodes interconnected by external links transporting asynchronously multiplexed packets, each switching node including input modules (26ᵢ) and output modules (30ⱼ) interconnected by one or more switching elements (28ₚ), and each input or output module and each switching element being liable to lose packets,
- signaling packets can be generated in an input module, an output module and a switching element, and
- signaling packets generated in an input module or a switching element are routed to output modules effecting the monitoring and/or sending the signaling packets downstream to other nodes.

13. A method according to claim 12, **characterized in that**, monitoring is effected in an output module of a node, and signaling packets are eliminated in an output module.

14. A method according to claim 13, **characterized in that**, in order to monitor cumulative packet losses over N consecutive nodes, the first N-1 nodes send signaling packets downstream to the next node and the last node performs the monitoring, the losses monitored in the last node comprising losses detected on the upstream side of the output module of the last node and indicated in the received signaling packet and losses detected locally in said output module.

15. A method according to any one of the preceding claims, **characterized in that** the signaling packet includes a packet loss origin indicator that is initialized to a local origin value when the signaling packet is generated in a switching element or a module in which the packet loss occurred and that is modified to an external origin value as soon as an output module sends a signaling packet downstream to another node of the network.

16. A method according to claim 15, **characterized in that** the packet loss origin indicator in each signaling packet is used both for monitoring the global packet loss rate over a plurality of consecutive nodes, and for selectively monitoring the local packet loss rate in each node of that series of nodes.

17. A method according to any one of the preceding claims, **characterized in that** signaling packets generated in the terminal modules or the switching elements are stored in a dedicated buffer for storing signaling packets, and **in that** the signaling packets from the dedicated buffer are multiplexed with the normal packets sent.

18. A method according to any one of claims 1 to 16, **characterized in that** the signaling packets generated in the terminal modules or the switching elements are stored in the buffer of that module or switching element at the same time as the data packets.
